# EUROPEAN PATENT APPLICATION

(11) **EP 3 434 656 A1**
(43) Date of publication of application: **30.01.2019**
(21) Application number: 17183562.2
(22) Date of filing: 27.07.2017
(51) Int. Cl.: C04B 28/04, C04B 16/06, C09K 8/467

(54) **ENGINEERED CEMENTITIOUS COMPOSITES COMPRISING PBO FIBERS**

(71) Applicant: BASF SE, 67056 Ludwigshafen am Rhein (DE)
(72) Inventor: KIERAT, Radoslaw, 83352 Altenmarkt (DE); SCHLESINGER, Maik, 83308 Trostberg (DE)
(74) Representative: Maiwald Patent- und Rechtsanwaltsgesellschaft mbH

(57) **Abstract**

The present invention relates to an engineered cementitious composite comprising fibers made of poly(p-phenylene-2,6-benzobisoxazole) (PBO) as well as to the use of fibers made of poly(p-phenylene-2,6-benzobisoxazole) for preparing the engineered cementitious composite according to the invention, to the use of fibers made of poly(p-phenylene-2,6-benzobisoxazole) as an additive in wellbore cementing, and to the use of the engineered cementitious composite according to the invention as a construction material for bridges, highways, memorials, or buildings.

## Description

The present invention relates to an engineered cementitious composite comprising fibers made of poly(p-phenylene-2,6-benzobisoxazole) (PBO) as well as to the use of fibers made of poly(p-phenylene-2,6-benzobisoxazole) for preparing the engineered cementitious composite according to the invention, to the use of fibers made of poly(p-phenylene-2,6-benzobisoxazole) as an additive in wellbore cementing, and to the use of the engineered cementitious composite according to the invention as a construction material for bridges, highways, memorials or buildings.

Many structures built with concrete and cement, such as bridges, highways, memorials and buildings, face stability and usability problems due to cracking issues. In many cases, the structures have to be reconstructed and repaired, which results in high costs and obstructions such as shutdown of bridges and buildings as well as road construction and traffic jam. Those issues arise intrinsically from the concrete and cement itself like alkali-silica reaction and brittle deformation behavior due to too high mechanical loadings or by corrosion of the reinforcement (e.g. steel).

The above-mentioned issues can be solved by an active control of crack opening by means of internal fiber reinforcement.

WO 01/68548 A1 discloses a fiber-containing cement composite comprising metal fibers. The composite exhibits positive and ductile strain hardening behavior in uniaxial tension.

FR 2 806 404 A discloses a thin cement-fiber composite structure comprising metal fibers and exhibiting a compressive strength above 150 MPa.

US 2010/0326326 A relates to ductile ultra-high performance concrete that is reinforced by the use of glass fibers.

US 2005/066858 A1 relates to sprayable fiber reinforced hydraulically setting mortars that exhibit strain hardening behavior, and comprise hydraulically setting cement and less than 4 weight percent matrix interactive fibers, such as polyvinyl alcohol fibers.

JP 2009-221053 A discloses cement compositions comprising aramid fibers.

JP 2013-023416 A discloses fiber reinforced concretes with a high compressive strength of, e.g., above 180 MPa. The fibers are made of poly(p-phenylene-2,6-benzobisoxazole) (PBO).

However, the fiber reinforced cement compositions and concretes described in the art have disadvantages. For example, steel fibers face corrosion issues and offer brittle deformation behavior. Polyvinyl alcohol (PVA) fibers have been considered as alternative fiber materials. However, although they exhibit a good adhesion to the cementitious matrix, the fibers have such a high hydrophilicity that only small crack openings of the cementitious matrix can be formed. Accordingly, only a low ductility can be provided. Moreover, the ductility may be reduced over time as the long term stability of PVA fibers is difficult to ensure. Polypropylene (PP) fibers have also been considered as alternative fiber materials. However, they exhibit a weak adhesion to the cementitious matrix and may get pulled off upon cracking. Accordingly, the ductile/multi-cracking behavior is also limited.

Furthermore, some of the fiber reinforced cement compositions and concretes described in the art are disadvantageous in that they exhibit a high compressive strength of, e.g., above 150 MPa or even above 180 MPa. However, such high compressive strengths can result in bursting of the structures under strain, and a ductile behavior will therefore not be observed.

Accordingly, it was an object of the present invention to provide an improved fiber reinforced cement-based composite material, which exhibits ductile and/or multi-cracking behavior, but at the same time overcomes the corrosion issues observed in connection with steel fibers. Furthermore, it was an object of the present invention to provide fibers, which are suitable for providing ductile and/or multi-cracking behavior of a cementitious composite.

It has surprisingly been found that the above objects can be achieved by the present invention, which is described hereafter.

In one embodiment, the present invention relates to an engineered cementitious composite obtainable from, preferably obtained from
(i) at least one cement;
(ii) at least one supplementary cementitious material selected from blast furnace slag, microsilica, metakaolin, alumosilicates, fly ash, and mixtures thereof;
(iii) fibers made of poly(p-phenylene-2,6-benzobisoxazole) (PBO) in an amount of from 0.1 to 3.0 vol.-% based on the total volume of the engineered cementitious composite;
(iv) water; and optionally
(v) at least one additive.

The term engineered cementitious composite (ECC) refers to a fiber reinforced cement-based composite material with ductile and/or multi-cracking behavior. Unlike conventional concrete, ECC typically has a strain capacity in the range of from 2 to 7 %, compared to 0.01 % for ordinary Portland cement (OPC). ECC therefore preferably acts more like a ductile metal than a brittle glass (as does OPC concrete). In general, the compressive strength of ECC is from 20 to 150 MPa, preferably from 20 to 90 MPa. Moreover, ECC is preferably characterized by an ultimate tensile strength of from 1 to 7 MPa and a first cracking strength of from 1 to 7 MPa. Preferably, the ECC has a Young's modulus of from 16 to 34 GPa.

It has surprisingly been found according to the present invention that the addition of PBO fibers to a certain cementitious matrix provides an engineered cementitious composite, i.e. a ductile material. In particular, the PBO fibers surprisingly transform the cementitious matrix from a brittle into a ductile material. In particular, under strain, the PBO fibers allow for the formation of multiple microcracks with a very specific width, rather than few large cracks (as in conventional concrete). This cracking behavior provides the ductile properties of the material. The cementitious matrix of the cementitious composite according to the invention further provides a compressive strength, which is such that bursting under tension will not be observed. In particular, the compressive strength is from 20 to 150 MPa, preferably from 20 to 90 MPa. Thus, combining the PBO fibers with the cementitious matrix results in an engineered cementitious composite with ductile and/or multi-cracking behavior.

It is a surprising finding of the present invention that the PBO fibers not only exhibit a strong interaction with the cementitious matrix of the cementitious composite of the invention, but also have a high tensile strength and elastic modulus to be able to bear more load than the cementitious matrix itself. Accordingly, the cementitious composite according to the invention is an engineered cementitious composite (ECC) with ductile and/or multi-cracking behavior. As described in further detail below, the ductile/multi-cracking behavior of the ECC according to the present invention can, e.g., be determined by the single crack notched coupon test.

In a further embodiment, the present invention relates to the use of fibers made of poly(p-phenylene-2,6-benzobisoxazole) (PBO) for preparing an engineered cementitious composite according to the invention.

In yet a further embodiment, the present invention relates to the use of fibers made of poly(p-phenylene-2,6-benzobisoxazole) (PBO) as an additive in wellbore cementing.

In yet a further embodiment, the present invention relates to the use of the engineered cementitious composite (ECC) according to the invention as a construction material for bridges, highways, memorials or buildings.

Further details regarding the present invention are described hereinafter. It is to be understood that the preferred embodiments as defined hereinafter are preferred alone as well as in combination with each other. Furthermore, the preferred embodiments relate not only to the engineered cementitious composite according to the invention, but also to the above-mentioned uses according to the invention.

As mentioned above, in one embodiment, the present invention relates to an engineered cementitious composite obtainable from, preferably obtained from
(i) at least one cement;
(ii) at least one supplementary cementitious material selected from blast furnace slag, microsilica, metakaolin, alumosilicates, fly ash, and mixtures thereof;
(iii) fibers made of poly(p-phenylene-2,6-benzobisoxazole) in an amount of from 0.1 to 3.0 vol.-% based on the total volume of the engineered cementitious composite;
(iv) water; and optionally
(v) at least one additive.

Preferably, the engineered cementitious composite is obtainable, preferably obtained by a process comprising the steps of
(1) mixing
   (i) at least one cement;
   (ii) at least one supplementary cementitious material selected from blast furnace slag, microsilica, metakaolin, alumosilicates, fly ash, and mixtures thereof;
   (iii) fibers made of poly(p-phenylene-2,6-benzobisoxazole) in an amount of from 0.1 to 3.0 vol.-% based on the total volume of the engineered cementitious composite;
   (iv) water; and optionally
   (v) at least one additive;
   and
(2) hardening the mixture.

The step of hardening preferably takes at least 12 hours and may be performed at a temperature in the range of from 0 °C to 100 °C.

In the hardening step, the water causes the hardening of the at least one cement and the at least one supplementary cementitious material through a process called hydration. Hydration is a chemical reaction in which the major compounds in cement form chemical bonds with water molecules and become hydrates or hydration products.

Thus, in one embodiment, the present invention relates to an engineered cementitious composite comprising
(i) at least one cement;
(ii) at least one supplementary cementitious material selected from blast furnace slag, microsilica, metakaolin, alumosilicates, fly ash, and mixtures thereof;
(iii) fibers made of poly(p-phenylene-2,6-benzobisoxazole) (PBO) in an amount of from 0.1 to 3.0 vol.-% based on the total volume of the engineered cementitious composite;
(iv) water; and optionally
(v) at least one additive.

In connection with this embodiment, it is to be understood that the water is present in the form of a hydrate or hydration product of the at least one cement and the at least one supplementary cementitious material.

In a further embodiment, the present invention relates to a process of preparing an engineered cementitious composite comprising the steps of
(1) mixing
   (i) at least one cement;
   (ii) at least one supplementary cementitious material selected from blast furnace slag, microsilica, metakaolin, alumosilicates, fly ash, and mixtures thereof;
   (iii) fibers made of poly(p-phenylene-2,6-benzobisoxazole) in an amount of from 0.1 to 3.0 vol.-% based on the total volume of the engineered cementitious composite;
   (iv) water; and optionally
   (v) at least one additive;
   and
(2) hardening the mixture.

The step of hardening preferably takes at least 12 hours and may be performed at a temperature in the range of from 0 °C to 100 °C.

The following definitions are relevant in connection with the present invention.

As used herein, the term "wt.-%" refers to the ratio of the mass of the respective component in relation to the sum of the mass of all components in percent, if not stated otherwise. The term "vol.-%" refers to the ratio of the volume of the respective component in relation to the sum of the volume of all components in percent.

It is moreover intended that in each actual case the sum of all of the percentages of the specified and unspecified constituents of the formulation of the invention is always 100 %.

The meaning of the term "comprising" is to be interpreted as encompassing all the specifically mentioned features as well as optional, additional, unspecified ones, whereas the term "consisting of" only includes those features as specified.

Inorganic binders are inorganic compounds that harden in an aqueous environment (hydraulic) or in the presence of air (non-hydraulic). For example, cements are hydraulic inorganic binders, whereas gypsum is a non-hydraulic binder. A latent hydraulic binder refers to a binder that only becomes hydraulic when exposed to an alkaline activator.

Cement is an inorganic, finely milled hydraulic binder. A variety of hydraulic cements can be utilized in accordance with the present invention including those comprised of calcium, aluminum, silicon, oxygen and/or sulfur which set and harden by reaction with water. Such hydraulic cements include, but are not limited to, Portland cements, pozzolana cements, gypsum cements, high alumina content cements, silica cements and high alkalinity cements. Portland cements are generally preferred for use in accordance with the present invention, and Portland cements of the types defined and described in API Specification For Materials And Testing For Well Cements, API Specification 10, 5th Edition, dated Jul. 1, 1990 of the American Petroleum 25 Institute and their equivalents are particularly preferred. API Portland cements including classes A, B, C, G and H can be utilized with API classes G and H being preferred and class H being the most preferred.

The different types of cement are also classified according to DIN EN 197-1 (11/2011) into the categories CEM I-V. These different cements vary from each other in their stability towards various corrosives and these cements therefore have different applications.

CEM I cement, also called Portland cement, contains about 70 wt.-% CaO and MgO, about 20 wt.-% SiO₂, about 10 wt.-% Al₂O₃ and Fe₂O₃. This cement is obtained by milling and baking limestone, chalk, and clay. CEM II cement, is Portland cement with a low (about 6 to about 20 wt.-%) or moderate (about 20 to about 35 wt.-%) amount of additional components. This cement may further contain blast-furnace slag, fumed silica (10 wt.-% at most), natural pozzolans, natural calcined pozzolans, fly ash, burnt shale, or mixtures thereof. CEM III cement, also called blast-furnace cement, is comprised of Portland cement that contains 36 to 85 wt.-% of slag. CEM IV cement, also called pozzolanic cement, contains next to Portland cement 11 to 65 wt.-% of mixtures of pozzolans, silica fume and fly ash. CEM V cement, also called composite cement, contains next to Portland cement 18 to 50 wt.-% of slag, or mixtures of natural pozzolans, calcined pozzolans, and fly ash. Additionally, the different types of cements may contain 5 wt.-% of additional inorganic, finely milled mineral compounds.

In addition, the term "cement" covers calcium aluminate cements, calcium sulfoaluminate cements, and mixtures thereof.

The term "calcium aluminate cements" refers to cements that predominantly comprise CaO x Al₂O₃. They can, e.g., be obtained by melting calcium oxide (CaO) or limestone (CaCO₃) and bauxite or aluminate together. Calcium aluminate cement comprises about 20 to 40% by weight of CaO, up to about 5% by weight of SiO₂, about 40 to 80% by weight of Al₂O₃ and up to about 20% by weight of Fe₂O₃. Calcium aluminate cements are defined according to DIN EN 14647 (01/2006).

The term "calcium sulfoaluminate cement" refers to a mixture, which is obtainable from tricalcium aluminate (3CaO x Al₂O₃) and anhydrite (CaSO₄), calcium sulfate hemihydrate (CaSO₄ x 0.5 H₂O) and/or gypsum (CaSO₄ x 2 H₂O), preferably in a molar ratio of from 20:80 to 30:70, preferably 25:75. Thus, the calcium sulfoaluminate cement typically has an analytical composition of about 3CaO x Al₂O₃ x 3CaSO₄. However, it is to be understood that a mixture of the above-mentioned components is present, so that the analytical composition is not intended to represent a one-component system. However, ettringite, i.e. hexacalcium aluminate trisulfate hydrate, of general formula (CaO)₆(Al₂O₃)(SO₃)₃·32H₂O or (CaO)₃(Al₂O₃)(CaSO₄)₃·32H₂O may be formed upon hydration as a result of the reaction of calcium aluminate with calcium sulfate.

Thus, the at least one cement is preferably selected from CEM I, CEM II, CEM III, CEM IV, CEM V cements, according to DIN EN 197-1 (11/2011), calcium aluminate cements, calcium sulfoaluminate cements, and mixtures thereof.

The at least one supplementary cementitious material preferably has hydraulic or latent hydraulic properties.

In one embodiment, the at least one supplementary cementitious material is selected from blast furnace slag, microsilica, metakaolin, alumosilicates, fly ash, and mixtures thereof.

As used herein, the term "slag" refers to the by-product of a smelting process, or synthetic slag. The main use of a smelting process is to convert an ore, scrap or a material mixture containing different metals into a form from which the desired metals can be skimmed as a metal layer and the undesired metal oxides, e.g. silicates, alumina, etc., remain as the slag.

Blast furnace slag (BFS) is formed as a by-product during the smelting of iron ore in the blast-furnace. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity. For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45 % by weight of CaO, about 4 to 17 % by weight of MgO, about 30 to 45 % by weight of SiO₂ and about 5 to 15 % by weight of Al₂O₃, typically about 40 % by weight of CaO, about 10 % by weight of MgO, about 35 % by weight of SiO₂ and about 12 % by weight of Al₂O₃.

Amorphous silica is preferably an X-ray-amorphous silica, i.e. a silica for which the powder diffraction method reveals no crystallinity. The content of SiO₂ in the amorphous silica of the invention is advantageously at least 80 % by weight, preferably at least 90 % by weight. Precipitated silica is obtained on an industrial scale by way of precipitating processes starting from water glass. Precipitated silica from some production processes is also called silica gel.

Microsilica is a fine powder, mainly comprising amorphous SiO₂ powder and is a by-product of silicon or ferrosilicon production. The particles have a diameter of about 100 nm and a specific surface area of from about 15 to about 30 m²g⁻¹.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m² g⁻¹.

Metakaolin is produced when kaolin is dehydrated. Whereas at from 100 to 200 °C kaolin releases physically bound water, at from 500 to 800 °C a dehydroxylation takes place, with collapse of the lattice structure and formation of metakaolin (Al₂Si₂O₇). Accordingly, pure metakaolin comprises about 54 % by weight of SiO₂ and about 46 % by weight of Al₂O₃.

Aluminosilicates or alumosilicates are minerals comprising aluminum, silicon, and oxygen, which may be expressed by referring to the SiO₂ and Al₂O₃ content. They are a major component of kaolin and other clay minerals. Andalusite, kyanite, and sillimanite are naturally occurring aluminosilicate minerals that have the composition Al₂SiO₅.

Fly ash is produced inter alia during the combustion of coal in power stations, and comprises fine particles of varying composition. The main ingredients of fly ash are silicon oxide, aluminum oxide, and calcium oxide. Class C fly ash (brown-coal fly ash) comprises according to WO 08/012438 about 10 wt.-% CaO, whereas class F fly ash (hard-coal fly ash) comprises less than 8 % by weight, preferably less than 4 % by weight, and typically about 2 % by weight of CaO.

The fibers made of poly(p-phenylene-2,6-benzobisoxazole) (PBO) are preferably used in an amount of from 0.25 to 2.0 vol.-% based on the total volume of the engineered cementitious composite. More preferably, the PBO fibers may be used in an amount of from 0.25 to 1.5 vol.-%, particularly preferably in an amount of from 0.5 to 1.5 vol.-%, based on the total volume of the engineered cementitious composite. The fibers preferably have a diameter of from 10 to 40 µm, and a length of from 1 to 15 mm. Suitable fibers are available under the tradename Zylon® (available from Toyobo).

The term "water" as used herein, can refer to fresh water or salt water e.g. an unsaturated aqueous salt solution or a saturated aqueous salt solution such as brine or seawater. The water may be present in an amount from about 0 wt.-% to about 180 wt.-%, or from about 5 wt.-% to about 150 wt.-%, or from about 10 wt.-% to about 90 wt.-%, or from about 10 wt.-% to about 30 wt.-%, by weight of cement. The amount of water may depend on the desired density of the cement slurry and the desired slurry rheology and as such may be determined by one of ordinary skill in the art with the aid of this disclosure. It is to be understood that in the engineered cementitious composite, i.e. after hardening, the water will be present as hydrate.

Furthermore, various additives may be used according to the present invention. In a preferred embodiment, the at least one additive is selected from the group consisting of rheology modifiers, superplasticizers, retarders, accelerators, fillers, surfactants, pH modifiers, and mixtures thereof. In a preferred embodiment, the at least one additive is selected from the group consisting of rheology modifiers, superplasticizers, retarders, accelerators, fillers, and mixtures thereof.

Rheology modifiers adjust the viscosity and thus the flow behavior and ensure a good balance between consistency, durability and application properties. These modifiers can be based on synthetic polymers (e.g. acrylic polymers), cellulose, silica, starches or clays.

Superplasticizers are polymers that function as dispersant to avoid particle segregation or improve the rheology and thus workability of suspensions. Superplasticizers generally can be divided into the following categories: lignosulfonates, melamine sulfonates, naphthalene sulfonates, comb polymers (e.g. polycarboxylate ethers, polyaromatic ethers, cationic copolymers, and mixtures thereof), and sulfonated ketone formaldehyde condensates. Preferred superplasticizers are naphthalene sulfonates or polycarboxylate ethers.

The setting time of the engineered cementitious composite can be prolonged / shortened by the addition of certain compounds called retarders / accelerators. Retarders can be divided into the groups of lignosulfonates, cellulose derivatives, hydroxyl carboxylic acids, organophosphates, synthetic retarders, and inorganic compounds. Non-limiting examples of retarders are hydroxyethyl cellulose, carboxymethyl hydroxyethyl cellulose, citric acid, tartaric acid, gluconic acid, glucoheptonate, maleic anhydride, 2-Acrylamido-2-methylpropanesulfonic acid (AMPS) copolymers, borax, boric acid, and ZnO. Non-limiting examples of accelerators are CaCl₂, KCI, Na₂SiO₃, NaOH, Ca(OH)₂, and CaO x Al₂O₃, lithium silicate, potassium silicate, and aluminum salts, such as aluminum sulfate.

The term "filler" refers primarily to materials that can be added to increase the volume without impairing the properties of the engineered cementitious composite. The fillers mentioned can be selected from the group consisting of quartz sand or powdered quartz, calcium carbonate, rock flour, low-density fillers (for example vermiculite, perlite, diatomaceous earth, mica, talc powder, magnesium oxide, foamed glass, hollow spheres, foam sand, clay, polymer particles), pigments (e.g. titanium dioxide), high density fillers (e.g. barium sulphate), metal salts (e.g. zinc salts, calcium salts, etc.), and mixtures thereof. Grain sizes suitable here are in particular up to 500 µm. It is particularly preferable that the average grain size of the foamed glass is up to 300 µm.

Surfactants, which may be used in addition to the amphiphilic compounds as defined herein, include non-ionic surfactants, anionic surfactants, cationic surfactants, zwitterionic surfactants and proteins or synthetic polymers.

Non-ionic surfactants include fatty alcohols, cetyl alcohol, stearyl alcohol, and cetostearyl alcohol (comprising predominantly cetyl and stearyl alcohols), and oleyl alcohol. Further examples include polyethylene glycol alkyl ethers (Brij) CH₃-(CH₂)₁₀₋₁₆-(O-C₂H₄)₁₋₂₅-OH such as octaethylene glycol monododecyl ether or pentaethylene glycol monododecyl ether; polypropylene glycol alkyl ethers CH₃-(CH₂)₁₀₋₁₆-(O-C₃H₆)₁₋₂₅-OH; glucoside alkyl ethers CH₃-(CH₂)₁₀₋₁₆-(O-Glucoside)₁₋₃-OH such as decyl glucoside, lauryl glucoside, octyl glucoside; polyethylene glycol octylphenyl ethers C₈H₁₇-(C₆H₄)-(O-C₂H₄)₁₋₂₅-OH such as Triton X-100; polyethylene glycol nonylphenyl ethers C₉H₁₉-(C₆H₄)-(O-C₂H₄)₁₋₂₅-OH such as nonoxynol-9; glycerol alkyl esters such as glyceryl laurate; polyoxyethylene glycol sorbitan alkyl esters such as polysorbate; sorbitan alkyl esters such as spans; cocamide MEA, cocamide DEA; dodecyldimethylamine oxide; block copolymers of polyethylene glycol and polypropylene glycol such as poloxamers; polyethoxylated tallow amine (POEA). Preferred non-ionic surfactants also include alkyl polyglucosides. Alkyl polyglucosides generally have the formula H-(C₆H₁₀O₅)ₘ-OR¹, where (C₆H₁₀O₅) is a glucose unit and R¹ is a C₆-C₂₂-alkyl group, preferably a C₈-C₁₆-alkyl group and in particular a C₈-C₁₂-alkyl group, and m = from 1 to 5.

Anionic surfactants contain anionic functional groups at their head, such as sulfate, sulfonate, phosphate, and carboxylate. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate, alkyl-aryl ether phosphates, alkyl ether phosphates. Preferred carboxylates include alkyl carboxylates, such as sodium stearate. More specialized species include sodium lauroyl sarcosinate and carboxylate-based fluorosurfactants such as perfluorononanoate, perfluorooctanoate (PFOA or PFO).

Cationic surfactants include, dependent on the pH, primary, secondary, or tertiary amines: Primary and secondary amines become positively charged at pH < 10. An example is octenidine dihydrochloride. Furthermore, cationic surfactants include permanently charged quaternary ammonium salts, such as cetrimonium bromide (CTAB), cetylpyridinium chloride (CPC), benzalkonium chloride (BAC), benzethonium chloride (BZT), dimethyldioctadecylammonium chloride, dioctadecyldimethylammonium bromide (DODAB).

Zwitterionic (amphoteric) surfactants have both cationic and anionic centers attached to the same molecule. The cationic part is based on primary, secondary, or tertiary amines or quaternary ammonium cations. The anionic part can be more variable and include sulfonates, as in the sultaines CHAPS (3-[(3-Cholamidopropyl)dimethylammonio]-1-propanesulfonate) and cocamidopropyl hydroxysultaine. Betaines such as cocamidopropyl betaine have a carboxylate with the ammonium. The most common biological zwitterionic surfactants have a phosphate anion with an amine or ammonium cation, such as the phospholipids phosphatidylserine, phosphatidylethanolamine, phosphatidylcholine, and sphingomyelins. Non-limiting examples of proteins are bovine serum albumin, egg ovalbumin, milk caseins or beta-lactoglobulin.

The proportion of the surfactant, based on the engineered cementitious composite of the invention, can vary over a broad range. Preferably, the surfactant is present in an amount of up to 2.5 % by weight, preferably up to 1.5 % by weight based on the total solids weight of the engineered cementitious composite.

The term "pH modifier" refers to an alkaline or acidic agent and includes mineral and organic acids as well as inorganic and organic bases.

In a preferred embodiment of the present invention, the engineered cementitious composite according to the invention exhibits
- a first cracking strength of from 0.8 to 7.0 MPa; and
- a peak bridging stress of from 0.8 to 7.0 MPa;
wherein the first cracking strength is the same as the peak bridging stress or lower than the peak bridging stress;
and wherein the first cracking strength and the peak bridging stress are measured by a single crack notched coupon test.
Preferably, the first cracking strength is lower than the peak bridging stress. It is even more preferred that the first cracking strength is at least 0.4 MPa, preferably at least 1.0 MPa, more preferably at least 2.5 MPa lower than the peak bridging stress.

In a more preferred embodiment of the present invention, the engineered cementitious composite according to the invention exhibits
- a first cracking strength of from 1.5 to 7.0 MPa; and
- a peak bridging stress of from 1.5 to 7.0 MPa;
wherein the first cracking strength is the same as the peak bridging stress or lower than the peak bridging stress;
and wherein the first cracking strength and the peak bridging stress are measured by a single crack notched coupon test.
Preferably, the first cracking strength is lower than the peak bridging stress. It is even more preferred that the first cracking strength is at least 0.4 MPa, preferably at least 1.0 MPa, more preferably at least 2.5 MPa lower than the peak bridging stress.

The terms "first cracking strength" and "peak bridging stress" in connection with the single crack notched coupon test are explained in further detail hereinafter.

As indicated above, the ECC of the present invention exhibits advantageous ductile properties, which can be measured by the single crack notched coupon test. In this test, the tensile stress - crack opening response of an ECC notched coupon specimen can be determined. A first peak of the tensile stress will be measured, when the single crack is formed, and a second peak of the tensile stress will be measured, when the fiber can no longer bridge the stress over the crack. Afterwards, further crack opening takes place. The first peak corresponds to the first cracking strength (σ₁) and the second peak corresponds to the maximum stress that fibers can bridge over the crack (peak bridging stress, σ₂). The tensile stress will be measured against the crack-opening width δ. It is to be understood that the first cracking strength (σ₁) can often not be measured, if the crack opening width at the first cracking strength (δ₁) is low, in particular lower than 40 µm or even lower than 10 µm. For ductile/multi-cracking behavior it is important that the maximum stress that fibers can bridge over the crack (peak bridging stress, σ₂) is higher than the first cracking strength (σ₁). This can even be the case, if the first cracking strength (σ₁) cannot be determined, but a clear peak for the peak bridging stress (σ₂) is obtained at a crack opening width (δ₂) of, e.g., about 50 to 1000 µm, which indicates the crack opening width until the fibers can no longer bridge the stress over the crack. It is to be understood that in certain cases, when the first cracking strength (σ₁) cannot be determined, this means that, when the first crack occurs, the fibers already start to bridge the stress over the crack, so that, already at this early stage, multi-cracking behavior is observed. Thus, the fact that the first cracking strength (σ₁) cannot be determined, often already indicates advantageous ductile behavior of the material.

The present invention is further illustrated by the following Figures.
Figure 1 shows a theoretical curve of the tensile stress [MPa] - crack opening [µm] relationship obtainable by the single crack notched coupon test.
Figure 2 shows a theoretical curve of the tensile load [N] - crack opening [µm] relationship obtainable by the single crack notched coupon test.

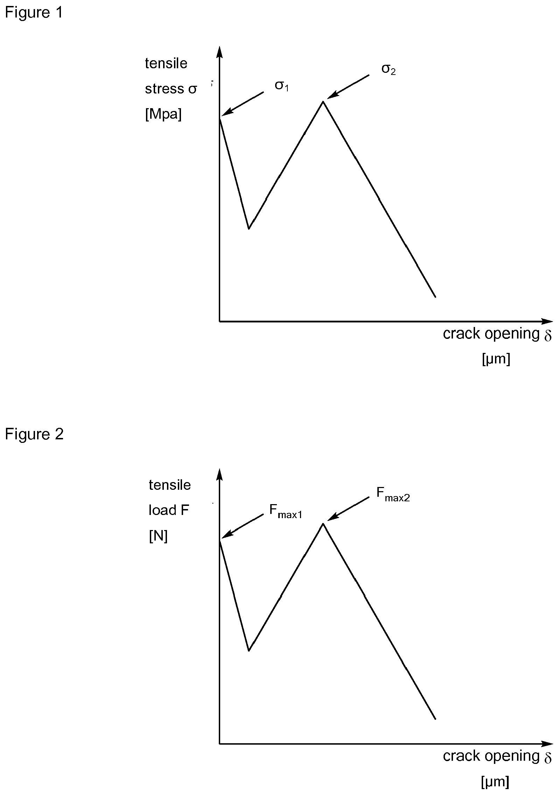

In general, the tensile stress is calculated by normalizing the tensile load by the cross-sectional area at the notch and plotted against the measured crack opening to obtain a tensile stress - crack opening curve. Thus, the tensile stress - crack opening relationship may be depicted in a diagram with the tensile stress [MPa] on the y-axis and the crack opening width [µm] on the x-axis as shown schematically in Figure 1. As mentioned above, the property that the first cracking strength (σ₁) is lower than the maximum stress that fibers can bridge over the crack (peak bridging stress, σ₂) results in a multiple cracking behavior under uniaxial tension. The first cracking strength corresponds to the tensile stress causing a first single crack. If the maximum stress that fibers can bridge over the crack (σ₂) is at least identical or preferably higher than the first cracking strength (σ₁), multi-cracking behavior is obtained.

The tensile load - crack opening relationship may also be depicted in a diagram with the tensile load [N] on the y-axis and the crack opening width [µm] on the x-axis as shown schematically in Figure 2. However, the curves of different ECCs are only comparable, if the cross-sectional area at the notch in each example are identical. However, also for these curves, it can generally be concluded that the property that the first cracking load (Fₘₐₓ₁) is lower than the maximum load that fibers can bridge over the crack (peak bridging load, Fₘₐₓ₂) results in a multiple cracking behavior under uniaxial tension. The first cracking load is the load causing a first single crack. If the maximum load that fibers can bridge over the crack is at least identical or preferably higher than the first cracking load, multi-cracking behavior is obtained. This is typically observed, if the fibers can bear more load than the cementitious matrix itself.

The single crack notched coupon test may be performed as follows. In general, notched coupon specimens are obtained by notching an ordinary rectangular cuboid prism in the middle of its longest side length. Within the invention a representative cross section of 20 mm x 40 mm is fabricated. The notch reduces the tested area of the whole specimen by 45-60 % to generate a single tensile crack in the specimen even for a strain hardening material. Deformation controlled tensile tests (e.g., 0.3 mm/min loading rate) can be conducted using clip-gauge measuring the opening displacement of a single crack. The deformation can be applied to the specimen through hydraulic grips providing fixed support to the both ends of the specimen. For further details, reference is made to I. Paegle, G. Fischer "Evaluation of test methods used to characterize fiber reinforced cementitious composites", 2013, in Proceedings of the International Conference "Innovative Materials, Structures and Technologies" (pp. 122-128); G. Fischer, H. Stand, L. Dieck-Nielsen, L. 2007, "Initiation and development of cracking in ECC materials: experimental observations and modelling", in Proceedings of the 6th International Conference on "Fracture Mechanics of Concrete and Concrete Structures", 3 (pp. 1517-1522), and E. B. Pereira, G. Fischer, J. A. Barros, M. Lepech, 2010, "Crack formation and tensile stress - crack opening behaviour of Fiber Reinforced Cementitious Composites (FRCC), in Proceedings of the 7th International Conference on "Fracture Mechanics of Concrete and Concrete Structures" (pp. 1639-1647).

In a preferred embodiment, the engineered cementitious composite exhibits
- a crack-opening of from 50 to 1000 µm, preferably from 200 to 800 µm, at a peak bridging stress of from 0.8 to 7.0 MPa;
wherein the crack-opening at the peak bridging stress is measured by a single crack notched coupon test.

In a more preferred embodiment, the engineered cementitious composite exhibits
- a crack-opening of from 50 to 1000 µm, preferably from 200 to 800 µm, at a peak bridging stress of from 1.5 to 7.0 MPa;
wherein the crack-opening at the peak bridging stress is measured by a single crack notched coupon test.

The term "crack-opening" refers to the crack-opening width δ as defined above. The crack-opening at the maximum stress that fibers can bridge over the crack (peak bridging stress, σ₂) or at the maximum load that fibers can bridge over the crack (peak bridging load, Fₘₐₓ₂) is referred to as δ₂ or δₘₐₓ₂. The crack-opening at the first cracking strength (σ₁) or at the first cracking load (Fₘₐₓ₁) is referred to as δ₁ or δₘₐₓ₁.

The advantageous properties of the engineered cementitious composite according to the present invention in terms of the ductile/multi-cracking behavior can only be obtained because the compressive strength is not to high, so that bursting of the material can be avoided.

Therefore, in another preferred embodiment, the engineered cementitious composite according to the invention has a compressive strength of from 20 to 150 MPa, preferably from 20 to 90 MPa, wherein the compressive strength is measured in a reference cementitious composition, which only differs in that the PBO fibers are absent, and wherein the compressive strength is measured in this reference cementitious composition according to ASTM C1609:2007-6. It is noted that the compressive strength can only be determined reliably, if the PBO fibers are absent because the PBO fibers reduce the compressive strength due to the provision of ductile/multi-cracking behavior. Thus, by determining a reference cementitious composition, a more realistic picture of the compressive strength can be provided, while a skilled person understands that the compressive strength can only be reduced due to the presence of the PBO fibers, but not increased.

In another preferred embodiment, the engineered cementitious composite according to the invention has a three-point flexural strength of from 1 to 30 MPa, preferably from 1 to 25 MPa, wherein the three-point flexural strength is measured in a reference cementitious composition, which only differs in that the PBO fibers are absent, and wherein the three-point flexural strength is measured in this reference cementitious composition according to ASTM C1609:2007-6. With regard to the determination of the three-point flexural strength, the same considerations apply as explained above with regard to the compressive strength. Thus, by determining a reference cementitious composition, a more realistic picture of the three-point flexural strength can be provided, while a skilled person understands that the three-point flexural strength can only be reduced due to the presence of the PBO fibers, but not increased.

The cementitious matrix of the cementitious composite according to the invention preferably comprises at least one cement and at least one supplementary cementitious material as explained above.

In a preferred embodiment, the cementitious matrix of the engineered cementitious composite comprises at least one cement, wherein the at least one cement comprises Portland cement or a Portland cement blend. It is particularly preferred that the at least one cement is present in an amount of from 5 to 50 wt.-%, of from 10 to 40 wt.-%, or of from 10 to 30 wt.-%, even more preferably in an amount of from 10 to 30 wt.-%, based on the total weight of the engineered cementitious composite according to the invention.

In a preferred embodiment, the at least one supplementary cementitious material comprises fly ash. It is more preferred that the fly ash is present in an amount of from 5 to 80 wt.-%, in an amount of from 10 to 70 wt.-% or in an amount of from 10 to 55 wt.-%, even more preferably in an amount of from 10 to 55 wt.-%, based on the total weight of the engineered cementitious composite according to the invention. In certain embodiments, fly ash is present in an amount of from 35 to 55 wt.-%, based on the total weight of the engineered cementitious composite according to the invention.

In a preferred embodiment, the engineered cementitious composite comprises fibers made of poly(p-phenylene-2,6-benzobisoxazole) in an amount of from 0.25 to 2.0 vol.-%, preferably in an amount of from 0.25 to 1.5 vol.-%, particularly preferably in an amount of from 0.5 to 1.5 vol.-%, based on the total volume of the engineered cementitious composite.

The fibers are usually randomly distributed in the engineered cementitious composite and have a length of less than 100 mm, of from 0.1 to 80 mm, of from 1 to 70 mm, or of from 1 to 15 mm, preferably of from 1 to 15 mm. In one embodiment, the fibers have a diameter of from 0.1 to 500 µm, of from 1 to 100 µm, of from 1 to 50 µm, or of from 10 to 40 µm, preferably of from 10 to 40 µm. It is even more preferred that the fibers have a length of from 1 to 15 mm and a diameter of from 10 to 40 µm.

The fibers have a density of from 0.5 to 3 g/cm³ or of from 1.3 to 1.8 g/cm³, preferably of from 1.3 to 1.8 g/cm³. The fibers have a tensile strength of from 1 to 30 GPa, of from 1 to 15 GPa, of from 3 to 9 GPa, or of from 5 to 7 GPa, preferably of from 5 to 7 GPa. The fibers have a tensile modulus of from 50 to 600 GPa, of from 100 to 400 GPa, or of from 150 to 300 GPa, preferably of from 150 to 300 GPa. In one preferred embodiment, the fibers have a density of from 1.3 to 1.8 g/cm³, and/or a tensile strength of from 5 to 7 GPa, and/or a tensile modulus of from 150 to 300 GPa.

Tensile strength is the maximum strength (stress) in a uniaxial tensile test that can be exerted before the material ruptures/breaks. The tensile strength of the fibers can be measured according to ASTM C1557-03 ("Standard Test Method for Tensile Strength and Young's Modulus of Fibers").

Tensile modulus, also called Young's modulus, is an intrinsic material property that determines which force has to be applied to elongate a specific material. The tensile modulus of a single fiber can be measured according to ASTM C1557-03 ("Standard Test Method for Tensile Strength and Young's Modulus of Fibers").

In a preferred embodiment, the at least one additive is selected from the group consisting of rheology modifiers, superplasticizers, retarders, accelerators, fillers, and mixtures thereof. In certain embodiments, the at least one additive is provided in an amount of from 0.0003 to 30 wt.-%, or of from 0.03 to 25 wt.-%, based on the total weight of the engineered cementitious composite. Preferably, the at least one additive is provided in an amount of from 0.01 to 0.5 wt.-%, based on the total weight of the engineered cementitious composite.

In an especially preferred embodiment, the cementitious matrix of the cementitious composite further comprises quartz sand and/or quartz flour as filler. Quartz sand and/or quartz flour is provided in an amount of from 4 to 12 wt.-% based on the total weight of the engineered cementitious composite. It is preferred that the quartz sand has an upper grain size D₉₀ measured by dynamic light scattering of 0.5 mm and the quartz flour has an upper grain size D₉₅ of 50 µm.

The term "particle size (Dₓ)" refers to the diameter of a particle distribution, wherein x % of the particles have a smaller diameter. The D₉₀ is thus the diameter of a distribution, wherein 90 % of the particles have a smaller diameter. The Dₓ particle size can e.g. be measured by laser diffraction or dynamic light scattering (DLS) methods. According to the present invention, laser diffraction (MasterSizer 2000, Malvern Instruments) is preferably used. The distribution can be a volume distribution (Dᵥ), a surface distribution (Dₛ), or a number distribution (Dₙ). In context of this application, the Dₓ value refers to a number distribution, wherein x(number) % of the particles have a smaller diameter.

Further details regarding suitable additives have been provided above.

In another preferred embodiment of the engineered cementitious composite according to the invention, the weight ratio of the water (iv) to the at least one cement (i) and the at least one supplementary cementitious material (ii), i.e. the weight ratio of (iv) : [(i) + (ii)], is from 0.1 to 0.7, preferably from 0.2 to 0.6.

In a particularly preferred embodiment, the engineered cementitious composite according to the invention is obtainable from, preferably obtained from
(i) at least one cement in an amount of from 10 to 30 wt.-%;
(ii) fly ash in an amount of from 10 to 55 wt.-%;
(iii) fibers made of poly(p-phenylene-2,6-benzobisoxazole) in an amount of from 0.1 to 3.0 vol.-% based on the total volume of the engineered cementitious composite;
(iv) water in an amount of from 10 to 30 wt.-%; and optionally
(v) at least one additive in an amount of from 0.01 to 0.5 wt.-%; and
(vi) quartz sand in an amount of from 4 to 12 wt.-%; and quartz flour in an amount of from 4 to 12 wt.-%,
the wt.-% in each case based on the total weight of the engineered cementitious composite.

As described above, in one embodiment, the present invention relates to the use of fibers made of poly(p-phenylene-2,6-benzobisoxazole) for preparing an engineered cementitious composite according to the invention. In other words, the present invention relates to the use of fibers made of poly(p-phenylene-2,6-benzobisoxazole) for preparing an engineered cementitious composite exhibiting ductile and/or multi-cracking behavior as measureable by the notched coupon test, wherein the first cracking strength is the same as the peak bridging stress or preferably lower than the peak bridging stress.

In another embodiment, the invention relates to the use of fibers made of poly(p-phenylene-2,6-benzobisoxazole) in wellbore cementing. In this context, the fibers act as a flexibilization agent, in order to improve the flexural strength and reduce gas migration of a cement composition.

As will be understood by those skilled in the art, when the cement compositions of this invention are utilized for cementing subterranean zones penetrated by wellbores, they can also include a variety of other conventional well cement additives. For example, the cement compositions can include weighting materials, set retarding additives, set accelerators, strength stabilizers, strength enhancers, light weight additives, anti-gas migration additives, fluid loss additives, defoamers, foamers, expansion additives, and the like.

In another embodiment, the invention relates to the use of the engineered cementitious composite according to the invention as a construction material for bridges, highways, memorials or buildings.

The present invention is further illustrated by the following examples.

### Examples

### Preparation of the engineered cementitious composite:

The engineered cementitious composite was prepared by mixing CEM I 42.5 R Mergelstetten cement (22.11 wt.-%), fly ash Voerde A/B (steament) ((44.92-x) wt.-%), quartz sand (d 0/0.3, 7.74 wt.-%), quartz flour (W12, 7.74 wt.-%), water (17.25 wt.-%), polycarboxylate based superplasticizer (0.22 wt.-%), rheology modifier (0.02 wt.-%), and fibers (x vol.-%, the corresponding weight ratio depends on the density of the used fiber according to the table below). The amount of the fibers (x) as well as the fiber material was varied. After mixing the components, the ECC was allowed to settle and dry for a sufficient period of time (1 d with encasing, 6 d at 20 °C under water, 7 d at 20 °C/65 % humidity).
The following fibers were used:

| Composition | Dimension | Density (g/cm³) | Tensile strength (GPa) | Tensile modulus (GPa) |
|---|---|---|---|---|
| PBO-AS | d: 12 µm, l: 6 mm | 1.54 | 5.8 | 180 |
| PBO-HM | d: 12 µm, l: 6 mm | 1.56 | 5.8 | 270 |
| PP (for comparison) | d: 13 µm, l: 12.7 mm | 0.91 | 0.48 | 8.48 |
| PVA (for comparison) | d: 13 µm, l: 6 mm | 1.3 | 1.8 | 40 |

| | | | | |
|---|---|---|---|---|
| AS = As Spun HM = High modulus PP = Polypropylene PVA = Polyvinyl alcohol | | | | |

### Single crack notched coupon test:

The single crack notched coupon test has been described in detail above. As explained, the single crack notched coupon test is designed to generate a single planar crack by making a notch in an ECC specimen and thereby destabilizing the material at a predetermined area. Then the first cracking load and the peak bridging load of the engineered cementitious composite can be measured.

The ECC sample was cut into a specimen of 60 mm x 90 mm x 25 mm (width x length x height) and notched to give a plan-parallel cross-sectional area of 40 mm x 20 mm.
The single crack notched coupon test was performed using the following apparatus: ZWICK Z250 SN AllroundLine.

### Example 1:

An amount of 1 vol.-% of fibers made of poly(p-phenylene-2,6-benzobisoxazole)-AS (PBO-AS) was used. The fibers had a diameter of 12 µm, a length of 6 mm, a density of 1.54 g/cm³, a tensile strength of 5.8 GPa and a tensile modulus of 180 GPa. The first cracking load Fₘₐₓ₁ could not exactly be determined as the crack opening of the fiber reinforced matrix itself is too small. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | - | - | 4782 | 305 |
| 2 | - | - | 5492 | 500 |
| 3 | - | - | 4944 | 486 |
| 4 | - | - | 3564 | 474 |
| 5 | - | - | 2381 | 250 |

### Example 2:

An amount of 0.75 vol.-% of fibers made of poly(p-phenylene-2,6-benzobisoxazole)-AS (PBO-AS) was used. The fibers had a diameter of 12 µm, a length of 6 mm, a density of 1.54 g/cm³, a tensile strength of 5.8 GPa and a tensile modulus of 180 GPa. The first cracking load Fₘₐₓ₁ could not exactly be determined as the crack opening of the fiber reinforced matrix itself is too small. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | - | - | 3442 | 264 |
| 2 | - | - | 2863 | 228 |
| 3 | - | - | 3882 | 161 |
| 4 | - | - | 3345 | 274 |
| 5 | - | - | 3747 | 271 |

### Example 3:

An amount of 0.50 vol.-% of fibers made of poly(p-phenylene-2,6-benzobisoxazole)-AS (PBO-AS) was used. The fibers had a diameter of 12 µm, a length of 6 mm, a density of 1.54 g/cm³, a tensile strength of 5.8 GPa and a tensile modulus of 180 GPa. The first cracking load Fₘₐₓ₁ could not in each case be determined. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | 2029 | 3 | 3455 | 89 |
| 2 | 1859 | 9 | 3001 | 125 |
| 3 | 1052 | 15 | 3005 | 138 |
| 4 | 1491 | 4 | 2277 | 164 |
| 5 | - | - | 3520 | 152 |

### Example 4:

An amount of 0.25 vol.-% of fibers made of poly(p-phenylene-2,6-benzobisoxazole)-AS (PBO-AS) was used. The fibers had a diameter of 12 µm, a length of 6 mm, a density of 1.54 g/cm³, a tensile strength of 5.8 GPa and a tensile modulus of 180 GPa. The results, including the first cracking load Fₘₐₓ₁ and the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | 1145 | 3 | 1626 | 90 |
| 2 | 1297 | 6 | 1168 | 110 |
| 3 | 494 | 30 | 925 | 76 |
| 4 | 1637 | 9 | 1565 | 109 |
| 5 | 1185 | 7 | 1790 | 182 |

### Example 5:

An amount of 1 vol.-% of fibers made of poly(p-phenylene-2,6-benzobisoxazole)-HM (PBO-HM) was used. The fibers had a diameter of 12 µm, a length of 6 mm, a density of 1.56 g/cm³, a tensile strength of 5.8 GPa and a tensile modulus of 270 GPa. The first cracking load Fₘₐₓ₁ could not exactly be determined as the crack opening of the fiber reinforced matrix itself is too small. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | - | - | 3378 | 121 |
| 2 | - | - | 4061 | 159 |
| 3 | - | - | 3137 | 212 |
| 4 | - | - | 4450 | 257 |
| 5 | - | - | 4722 | 406 |
| 6 | - | - | 3927 | 274 |
| 7 | - | - | 4500 | 170 |
| 8 | - | - | 4196 | 309 |
| 9 | - | - | 5143 | 485 |
| 10 | - | - | 4062 | 370 |

### Example 6:

An amount of 0.75 vol.-% of fibers made of poly(p-phenylene-2,6-benzobisoxazole)-HM (PBO-HM) was used. The fibers had a diameter of 12 µm, a length of 6 mm, a density of 1.56 g/cm³, a tensile strength of 5.8 GPa and a tensile modulus of 270 GPa. The first cracking load Fₘₐₓ₁ could not exactly be determined as the crack opening of the fiber reinforced matrix itself is too small. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | - | - | 3253 | 174 |
| 2 | - | - | 2753 | 307 |
| 3 | - | - | 2988 | 274 |
| 4 | - | - | 3456 | 108 |
| 5 | - | - | 2887 | 194 |
| 6 | - | - | 2695 | 182 |
| 7 | - | - | 2413 | 119 |
| 8 | - | - | 3496 | 297 |

### Example 7:

An amount of 0.50 vol.-% of fibers made of poly(p-phenylene-2,6-benzobisoxazole)-HM (PBO-HM) was used. The fibers had a diameter of 12 µm, a length of 6 mm, a density of 1.56 g/cm³, a tensile strength of 5.8 GPa and a tensile modulus of 270 GPa. The first cracking load Fₘₐₓ₁ could not in each case be determined. The results, including also the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | - | - | 2440 | 116 |
| 2 | 1670 | 1 | 2830 | 160 |
| 3 | 1788 | 3 | 2487 | 107 |
| 4 | 2096 | 1 | 2532 | 131 |
| 5 | 2135 | 1 | 2944 | 104 |
| 6 | 1934 | 2 | 3086 | 178 |
| 7 | 2317 | 3 | 3092 | 151 |
| 8 | 1713 | 15 | 3084 | 257 |

### Example 8:

An amount of 0.25 vol.-% of fibers made of poly(p-phenylene-2,6-benzobisoxazole)-HM (PBO-HM) was used. The fibers had a diameter of 12 µm, a length of 6 mm, a density of 1.56 g/cm³, a tensile strength of 5.8 GPa and a tensile modulus of 270 GPa. The results, including the first cracking load Fₘₐₓ₁ and the peak bridging load Fₘₐₓ₂, are summarized in the following table.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | 2139 | 2 | 1648 | 118 |
| 2 | 2497 | 2 | 1316 | 194 |
| 3 | 1887 | 1 | 1159 | 143 |
| 4 | 2094 | 7 | 1168 | 149 |
| 5 | 916 | 7 | 1034 | 329 |
| 6 | 765 | 13 | 834 | 241 |
| 7 | 1215 | 1 | 1348 | 255 |

### Comparative Example 9:

An amount of 1 vol.-% of fibers made of polypropylene (PP) was used. The fibers had a diameter of 13 µm, a length of 12.7 mm, a density of 0.91 g/cm³, a tensile strength of 0.48 GPa and a tensile modulus of 8.48 GPa. The results, including the first cracking load Fₘₐₓ₁ and the peak bridging load Fₘₐₓ₂, are summarized in the following table. In comparison to the examples according to the invention, in particular examples 1 and 5, wherein the same vol.-% amount of PBO fibers (PBO-AS or PBO-HM) was used, the Fₘₐₓ₂ values of comparative example 9 are significantly lower indicating a less ductile behavior.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | 1203 | 2 | 1339 | 495 |
| 2 | 1214 | 40 | 1491 | 597 |
| 3 | 1041 | 11 | 1227 | 469 |
| 4 | 1176 | 9 | 1426 | 663 |
| 5 | 1173 | 12 | 1456 | 480 |
| 6 | 1509 | 9 | 1794 | 586 |
| 7 | 1403 | 14 | 1668 | 543 |
| 8 | 1009 | 13 | 980 | 500 |
| 9 | 985 | 15 | 1214 | 516 |
| 10 | 1143 | 14 | 1102 | 533 |
| 11 | 1011 | 22 | 1590 | 550 |
| 12 | 1323 | 57 | 1764 | 545 |
| 13 | 1204 | 60 | 1322 | 406 |
| 14 | 1587 | 6 | 1588 | 370 |
| 15 | 1183 | 8 | 1446 | 552 |
| 16 | 1261 | 16 | 1411 | 570 |
| 17 | 1370 | 11 | 1959 | 652 |
| 18 | 1238 | 28 | 1614 | 452 |
| 19 | 1691 | 14 | 1923 | 484 |
| 20 | 1271 | 23 | 1515 | 512 |
| 21 | 1317 | 14 | 1743 | 561 |
| 22 | 1071 | 75 | 1688 | 607 |
| 23 | 856 | 10 | 1539 | 592 |
| 24 | 1106 | 43 | 1663 | 578 |
| 25 | 1231 | 75 | 1840 | 611 |
| 26 | 1203 | 14 | 1434 | 463 |
| 27 | 922 | 75 | 1502 | 562 |
| 28 | 1061 | 75 | 1622 | 647 |
| 29 | 1041 | 62 | 1432 | 479 |
| 30 | 1355 | 10 | 1413 | 399 |

### Comparative Example 10:

An amount of 1 vol.-% of fibers made of polyvinyl alcohol (PVA) was used. The fibers had a diameter of 13 µm, a length of 6 mm, a density of 1.3 g/cm³, a tensile strength of 1.8 GPa and a tensile modulus of 40 GPa. The results, including the first cracking load Fₘₐₓ₁ and the peak bridging load Fₘₐₓ₂, are summarized in the following table. In comparison to the examples according to the invention, in particular examples 1 and 5, wherein the same vol.-% amount of PBO fibers (PBO-AS or PBO-HM) was used, the Fₘₐₓ₂ values of comparative example 10 are significantly lower indicating a less ductile behavior. Furthermore, the Fₘₐₓ₁ value is in some measurements even higher than Fₘₐₓ₂ indicating that no multi-cracking behavior will be observed.

| Specimen No. | Fₘₐₓ₁ [N] | δₘₐₓ₁ [µm] | Fₘₐₓ₂ [N] | δₘₐₓ₂ [µm] |
|---|---|---|---|---|
| 1 | 1578 | 13 | 1478 | 242 |
| 2 | 1672 | 11 | 2119 | 244 |
| 3 | 1351 | 13 | 1935 | 247 |
| 4 | 1103 | 8 | 1062 | 200 |
| 5 | 1708 | 11 | 1923 | 257 |
| 6 | 1463 | 9 | 1430 | 219 |
| 7 | 1568 | 23 | 1309 | 151 |
| 8 | 1419 | 30 | 2005 | 238 |
| 9 | 1237 | 16 | 1303 | 182 |

### Example 11: Compressive strength (CS) and three-point flexural strength (FS) tests

The above mentioned formulation for preparing the engineered cementitious composite of the invention was used without the addition of any fiber in order to determine the three-point flexural strength (FS) and the compressive strength (CS) of the cementitious composition before, during and after setting and drying. The values after 28 days indicate the results for the final product.

| 1 day | | 7 days | | 28 days | |
|---|---|---|---|---|---|
| FS [MPa] | CS [MPa] | FS [MPa] | CS [MPa] | FS [MPa] | CS [MPa] |
| 4.43 | 7.41 | 11.62 | 29.56 | 15.84 | 52.42 |

The results for FS and CS were obtained according to ASTM C1609:2007-6.

It is noted that the compressive strength of the ECC according to the invention can only be determined reliably, if a reference cementitious composition is used, wherein the PBO fibers are absent because the PBO fibers reduce the compressive strength due to the provision of ductile/multi-cracking behavior. Thus, by determining a reference cementitious composition, a more realistic picture of the compressive strength can be provided, while a skilled person understands that the compressive strength can only be reduced due to the presence of the PBO fibers, but not increased. Thus, the compressive strength of the ECC according to the invention will be identical to or lower than the above values.

The same considerations apply with regard to the flexural strength.

## Claims

1. An engineered cementitious composite obtainable from
(i) at least one cement;
(ii) at least one supplementary cementitious material selected from blast furnace slag, microsilica, metakaolin, alumosilicates, fly ash, and mixtures thereof;
(iii) fibers made of poly(p-phenylene-2,6-benzobisoxazole) in an amount of from 0.1 to 3.0 vol.-% based on the total volume of the engineered cementitious composite;
(iv) water; and optionally
(v) at least one additive.

2. The engineered cementitious composite according to claim 1, wherein the cementitious composite exhibits
- a first cracking strength of from 0.8 to 7.0 MPa; and
- a peak bridging stress of from 0.8 to 7.0 MPa;
wherein the first cracking strength is the same as the peak bridging stress or lower than the peak bridging stress;
and wherein the first cracking strength and the peak bridging stress are measured by a single crack notched coupon test.

3. The engineered cementitious composite according to any one of claims 1 or 2, wherein the cementitious composite exhibits
- a crack-opening of from 50 to 1000 µm, preferably from 200 to 800 µm, at a peak bridging stress of from 0.8 to 7.0 MPa;
wherein the crack-opening at the peak bridging stress is measured by a single crack notched coupon test.

4. The engineered cementitious composite according to any one of claims 1 to 3, wherein the compressive strength is from 20 to 150 MPa, preferably from 20 to 90 MPa, wherein the compressive strength is measured in a reference cementitious composition, which only differs in that the PBO fibers are absent, and wherein the compressive strength is measured in this reference cementitious composition according to ASTM C1609:2007-6.

5. The engineered cementitious composite according to any one of claims 1 to 4, wherein the at least one cement comprises Portland cement or a Portland cement blend.

6. The engineered cementitious composite according to any one of claims 1 to 5, wherein the at least one supplementary cementitious material comprises fly ash.

7. The engineered cementitious composite according to any one of claims 1 to 6, wherein the fibers have a diameter of from 10 to 40 µm, and a length of from 1 to 15 mm.

8. The engineered cementitious composite according to any one of claims 1 to 7, wherein the fibers have a density of from 1.3 to 1.8 g/cm³, and/or a tensile strength of from 5 to 7 GPa, and/or a tensile modulus of from 150 to 300 GPa.

9. The engineered cementitious composite according to any one of claims 1 to 8, wherein the at least one additive is selected from the group consisting of rheology modifiers, superplasticizers, retarders, accelerators, fillers, and mixtures thereof.

10. The engineered cementitious composite according to claim 9, wherein the filler is quartz sand and/or quartz flour.

11. The engineered cementitious composite according to any one of claims 1 to 10, wherein the weight ratio of the water (iv) to the at least one cement (i) and the at least one supplementary cementitious material (ii), i.e. the weight ratio of (iv) : [(i) + (ii)], is from 0.1 to 0.7, preferably from 0.2 to 0.6.

12. The engineered cementitious composite according to any one of claims 1 to 11, which is obtainable from
(i) at least one cement in an amount of from 10 to 30 wt.-%;
(ii) fly ash in an amount of from 10 to 55 wt.-%;
(iii) fibers made of poly(p-phenylene-2,6-benzobisoxazole) in an amount of from 0.1 to 3.0 vol.-% based on the total volume of the engineered cementitious composite;
(iv) water in an amount of from 10 to 30 wt.-%; and optionally
(v) at least one additive in an amount of from 0.01 to 0.5 wt.-%;
(vi) quartz sand in an amount of from 4 to 12 wt.-%; and quartz flour in an amount of from 4 to 12 wt.-%,
the wt.-% in each case based on the total weight of the engineered cementitious composite.

13. Use of fibers made of poly(p-phenylene-2,6-benzobisoxazole) for preparing an engineered cementitious composite as defined in any one of claims 1 to 12.

14. Use of fibers made of poly(p-phenylene-2,6-benzobisoxazole) as an additive in wellbore cementing.

15. Use of the engineered cementitious composite as defined in any one of claims 1 to 12 as a construction material for bridges, highways, memorials or buildings.
